# EUROPÄISCHE PATENTSCHRIFT

(11) **EP 1 255 707 B1**
(45) Veröffentlichungstag und Bekanntmachung des Hinweises auf die Patenterteilung: **26.04.2006**
(21) Anmeldenummer: 00984852.4
(22) Anmeldetag: 19.10.2000
(51) Int. Cl.: C04B 35/043, B22D 41/32

(54) **RINGFÖRMIGER EINSATZ FÜR EINE SCHIEBERPLATTE SOWIE ZUGEHÖRIGE SCHIEBERPLATTE**
ANNULAR INSERT FOR A SLIDING PLATE AND CORRESPONDING SLIDING PLATE
INSERT ANNULAIRE POUR UNE PLAQUE COULISSANTE, ET PLAQUE COULISSANTE CORRESPONDANTE

(30) Priorität: 16.02.2000 DE 10006939
(43) Veröffentlichungstag der Anmeldung: 13.11.2002
(73) Patentinhaber: DIDIER-WERKE AG, 65189 Wiesbaden (DE)
(72) Erfinder: SCHULER, Andreas, 65232 Taunusstein (DE); BEGEL, Nicolas, F-88330 Chatel (FR); SHERRIFF, Robert, A-8600 Bruck (AT); WIESEL, Martin, 8793 Trofaiach (AT); VASSEUR, Patrick, F-91650 Breuillet (FR)
(74) Vertreter: Becker, Thomas
(86) Internationale Anmeldenummer: PCT/DE2000/003733
(87) Internationale Veröffentlichungsnummer: WO 2001/060761

(56) Entgegenhaltungen:
- US-A- 5 250 479

## Beschreibung

Schieberplatten, worunter sowohl Platten für Linear-Schieber als auch für Drehschieber verstanden werden, finden seit Jahrzehnten Verwendung zur Ausflußregelung an metallurgischen Schmelzgefäßen.

Es sind zahlreiche feuerfeste Werkstoffe und WerkstoffKombinationen für derartige Schieberplatten vorgeschlagen worden, beispielsweise Werkstoffe auf Basis Mullit-Korund oder Magnesit. Ebenso sind Platten aus feuerfestem Feuerbeton mit hydraulischer Bindung unter Anwendung von Tonerdezement veröffentlicht worden.

Um den besonders verschleißgefährdeten Teil einer Schieberplatte im Durchlaufbereich für die Metallschmelze zu verbessern, ist bereits vor über 20 Jahren vorgeschlagen worden, die Schieberplatte mit einem Grundkörper aus einem feuerfesten Feuerbeton auszubilden und einen oxidkeramischen Einsatz darin einzuformen (DE 27 19 105 C3). Für den oxidkeramischen Einsatz werden dabei MgO, Cr₂O₃, Al₂O₃ und/oder ZrO₂ vorgeschlagen, wobei der oxidkeramische Einsatz zu mindestens 99 % aus einem dieser Oxide oder einer Mischung daraus bestehen soll.

In diesem Zusammenhang ist es ebenfalls seit langem bekannt, eine Schieberplatte nach dem Gebrauch im Öffnungsbereich für die Metallschmelze auszubohren und anschließend einen neuen ringförmigen Einsatz darin einzumörteln. Dabei kann der ringförmige Einsatz umfangsseitig mit einer Stufe ausgebildet sein. Während der Innendurchmesser des Rings selbstverständlich konstant ist, ist der Außendurchmesser des Rings abgestuft, entsprechend einer korrespondierenden Abstufung des ausgebohrten Teils der gebrauchten Schieberplatte. Auf diese Weise wird sichergestellt, daß der Ring beim Einsatz sicher auf einem korrespondierenden Kragen aufliegt und sich nicht in Strömungsrichtung der Metallschmelze lösen kann.

Die vorgenannten Schieberplatten haben sich grundsätzlich bewährt. Soweit "Verbund-Schieberplatten" benutzt werden, also Schieberplatten aus einem Matrix-Werkstoff und einem eingesetzten Ring, ergeben sich immer wieder Probleme folgender Art: Durch unterschiedliche Wärmedehnungen kommt es zur Rißbildung im Übergangsbereich zwischen dem Einsatz und dem feuerfesten Matrixmaterial des Grundkörpers. Zudem kann über die Mörtelfuge Sauerstoff relativ leicht in den Durchflußbereich unerwünscht eindringen. Obwohl es grundsätzlich einen wesentlichen Vorteil darstellt, nur im besonders verschleißgefährdeten Durchlaufbereich für die Metallschmelze hochwertigen Werkstoff verwenden zu müssen und die Platte im übrigen aus preiswerteren Qualitäten, wie einem Feuerbeton, herstellen zu können, haben die sich daraus ergebenden, vorstehend skizzierten Nachteile dazu geführt, daß heute wieder überwiegend Schieberplatten durchgehend aus ein und demselben Werkstoff gefertigt werden.

In der US5250479 wird ein C-gebundener Schieberplatten-Einsatz beschrieben. Der Schieberplatten-Einsatz wird hergestellt, ausgehend von einem Versatz, der folgende Menge enthält: 2-8 Gew.-% Graphit, 3-8 Gew.-% Aluminium, 1-5 Gew.-% Silizium, 4-7,5 Gew.-% Harze, wobei der Rest MgO ist.

In der US 4,994,216 A wird ein Verfahren zur Herstellung eines C-gebundenen feuerfesten Formteils beschrieben. Der zugehörige Versatz enthält einen feuerfesten Grundwerkstoff, nämlich aluminiumoxid, Zirkonmullit, Silizium, ein Binderharz, einen Kohlenstoffträger aus der Gruppe Pech, Teer und 1-10 Gew.-% Hohlfasern, bezogen auf die Kohlenstoff-Komponente. Das Formteil kann ein Stein sein.

Ziel der Erfindung ist es, einen ringförmigen Schieberplatten-Einsatz vorzuschlagen, der den heutigen hohen Qualitätsanforderungen und Standzeiten genügt und insbesondere auch bei aggressiven Schlacken und Metallschmelzen, insbesondere solchen, denen CaSi zugesetzt wird, eingesetzt werden kann. Außerdem wird eine Abstimmung im Wärmedehnungsverhalten zwischen Grundplatte und Einsatz gewünscht.

Dabei geht die Erfindung von einem ringförmigen Einsatz auf Basis MgO-Kohlenstoff aus. Ein solcher MgO-C-Werkstoff stellt zwar einen hochwertigen Werkstoff dar, besitzt aber das Problem einer hohen Oxidationsanfälligkeit. Sofern Sauerstoff im Bereich zwischen den Schieberplatten und/oder über eine Mörtelfuge im Bereich des ringförmigen Einsatzes angesaugt wird, kommt es zu einer Oxidation des Kohlenstoffs und damit zu einer drastischen Verringerung der Standzeit der zugehörigen Schieberplatte. Weiterhin zeigen Einsätze auf Basis MgO-C durch die spezifische hohe Wärmedehnung ungünstige mechanische Eigenschaften (Rißbildung).

Überraschend wurde jetzt festgestellt, daß diese Probleme weitestgehend verhindert werden, wenn für den ringförmigen Schieberplatten-Einsatz ein Werkstoff gemäß nachstehender Spezifikation verwendet wird:
- 75 bis 90 M.-% feuerfestes Matrixmaterial in der Korngröße < 7 mm aus mindestens einem Stoff der Gruppe MgO-Sinter, MgO-Spinell, MgO-Kauster,
- 2 bis 15 M.-% Zirkonmullit in der Kornfraktion 0,1 - 5,0 mm,
- 1 bis 5 M.-% Kohlenstoff
- 1 bis 5 M.-% eines, die Oxidation des Kohlenstoffs hemmenden Zusatzmittels.

Ein solcher Einsatz zeigt nicht nur eine hervorragende Oxidationsbeständigkeit, sondern vor allem auch eine hervorragende Erosions- und Korrosionsbeständigkeit gegenüber metallischen Schmelzen und hier insbesondere auch gegenüber aggressiven Schmelzen, wie beispielsweise CaSi-Schmelzen. In Versuchen wurde eine bis zu 40 % bessere Verschleißbeständigkeit gegenüber konventionellen Einsätzen festgestellt.

Verantwortlich ist hierfür zum einen die Kombination eines MgO-Matrixmaterials mit Zirkonmullit sowie zum anderen die Zugabe eines, die Oxidation des Kohlenstoffs hemmenden Zusatzmittels in die Werkstoffmischung. Durch die Zugabe von Zirkon-Mullit kann das Wärmedehnungsverhalten charakteristisch verbessert (verringert) werden. Dadurch werden die mechanischen Eigenschaften des Einsatzes verbessert.

Ein weiterer Gesichtspunkt ist, daß der ringförmige Einsatz gemäß vorstehender Spezifikation durch das umgebende feuerfeste Matrixmaterial des Grundkörpers einer Schieberplatte nach Art eines Mantels geschützt wird. Auch hierdurch wird die Oxidation des Kohlenstoffs nachhaltig behindert.

Insoweit eignet sich der beschriebene ringförmige Einsatz im besonderen als Bauteil einer Drehschieberplatte, bei der der Einsatz im Vergleich zu einer Linear-Schieberplatte mehr zur Mitte der Platte angeordnet ist und von einem breiteren Abschnitt des Grundkörpers der Schieberplatte umrahmt wird.

Nach einer Ausführungsform wird die obere Korngröße des feuerfesten Matrixmaterials auf 5 mm festgelegt.

Versuche haben gezeigt, daß mit einem Anteil von 1 bis 30 M.-% einer Feinfraktion (< 10µm) des feuerfesten Matrixmaterials die gestellten Anforderungen besonders gut erfüllt wurden.

Je feiner die feinkörnige Fraktion des Matrixmaterials, insbesondere des MgO-Sinters/MgO-Kausters gewählt wird, um so höher ist die Qualität und Standzeit des Einsatzes, weshalb nach einer Ausführungsform vorgeschlagen wird, die Massenanteile der feinkörnigen Fraktion auf eine Grenzkorngröße < 5 µm zu beziehen, wobei die Grenzkorngröße auch bei 3 µm gewählt werden kann. Die Massenanteile der feinen Fraktion, jeweils bezogen auf die Gesamtmischung, bewegen sich beispielsweise zwischen 3 und 30 % oder 3 bis 15 %.

Der Werkstoffmischung kann ein Bindeharz zugegeben werden, beispielsweise ein Phenolharz. Der Anteil des Bindeharzes sollte dabei zwischen 2 und 8 M.-%, bezogen auf 100 M.-% der vorgenannten Komponenten (Gesamtmischung aus: MgO-Sinter und/oder MgO-Spinell und/oder MgO-Kauster, Zirkonmullit, Kohlenstoff, Zusatzmittel) liegen.

Das genannte Zusatzmittel, welches die Aufgabe hat, den Kohlenstoff vor Oxidation zu schützen (auch als Antioxidanz bezeichnet), kann beispielsweise aus Silicium oder Legierungen daraus bestehen. Bei höheren Temperaturen und geringem Sauerstoffangebot bilden sich voluminöse Oxide, die den Porenraum zumindest teilweise verschließen.

Dieser Effekt wird ergänzt durch die Verwendung des genannten Feinst-MgO-Sinters/-Kausters.

Gleichzeitig werden die Festigkeitseigenschaften des Einsatzes optimiert, zum Beispiel durch die Bildung von Carbiden, die auch zur Erniedrigung der Permeabilität führen.

Der beschriebene Einsatz, dessen Außendurchmesser z.B. für Anwendungen in Gießpfannenschiebern üblicherweise 80 bis 300 mm und dessen Innendurchmesser entsprechend etwa 20 bis 150 mm beträgt, kann unter reduzierender Atmosphäre gebrannt werden. Auch eine Teerung beziehungsweise Pechimprägnierung ist von Vorteil, weil hierdurch ein zusätzlicher Porenverschluß erreicht wird und damit ein zusätzlicher Oxidationsschutz. Außerdem wird die Temperaturwechselbeständigkeit verbessert.

Der beschriebene ringförmige Einsatz läßt sich vorteilhaft in einer Schieberplatte aus einem feuerfesten Matrix-Werkstoff auf Basis Aluminiumoxid-Kohlenstoff (Al₂O₃-C) einsetzen. Der Kohlenstoff des Matrixmaterials kann ebenso wie der Kohlenstoff des ringförmigen Einsatzes beispielsweise aus Graphit, Ruß oder Koks bestehen.

Das Matrixmaterial kann auch Borcarbid enthalten.

Zur Herstellung einer solchen Schieberplatte, beispielsweise einer Drehschieberplatte, kann der vorgefertigte, beispielsweise gepreßte Einsatz in einen vorgefertigten, beispielsweise ebenfalls gepreßten Grundkörper eingemörtelt werden. Weitere Anwendungen sind zum Beispiel in Konvertern oder Tundishen.

Die genannte Werkstoffauswahl für den Einsatz und den Grundkörper hat den besonderen Vorteil, daß der Einsatzring eine größere Wärmedehnung als das ihn umgebende Material des Grundkörpers aufweist. Auf diese Weise dehnt sich der Einsatz unter Temperaturlast (bei der Anwendung) aus, was nicht nur zu einer entsprechenden Selbstzentrierung führt, sondern gleichzeitig auch zu einem dichten Sitz zwischen Grundkörper und Einsatz, wodurch die Gefahr reduziert wird, daß in diesem Bereich Sauerstoff angesaugt wird. Außerdem wird die Rißbildung im Ring unterdrückt. Die Wärmedehnung kann gezielt durch die Menge und Kornfraktion des Zirkon-Mullits begrenzt werden. Die Wärmedehnung beträgt beispielsweise circa 1 % bei 1.500°C und entspricht damit etwa der Wärmedehnung des Al₂O₃-C-Grundmaterials der umgebenden Schieberplatte.

Daneben ist es auch möglich, den Einsatz und das ihn umgebende Matrixmaterial in einem gemeinsamen Arbeitsgang zu verpressen, und zwar ohne Mörtelfuge.

## Patentansprüche

1. Ringförmiger Schieberplatten-Einsatz auf Basis MgO-C mit folgenden Merkmalen:
- 75 bis 90 M.-% feuerfestes Matrixmaterial in der Korngröße < 7 mm aus mindestens einem Stoff der Gruppe MgO-Sinter, MgO-Spinell, MgO-Kauster
- 2 bis 15 M.-% Zirkonmullit in der Kornfraktion 0,1 - 5 mm
- 1 bis 5 M.-% Kohlenstoff
- 1 bis 5 M.-% eines, die Oxidation des Kohlenstoffs hemmenden Zusatzmittels.

2. Einsatz nach Anspruch 1 mit 75 bis 90 M.-% feuerfestem Matrixmaterial in der Kornfraktion < 5 mm aus mindestens einem Stoff der Gruppe MgO-Sinter, MgO-Spinell, MgO-Kauster.

3. Einsatz nach Anspruch 1 mit 75 bis 85 M.-% feuerfestem Matrixmaterial in der Kornfraktion < 7 mm aus mindestens einem Stoff der Gruppe MgO-Sinter, MgO-Spinell, MgO-Kauster.

4. Einsatz nach Anspruch 1 mit 75 bis 85 M.-% feuerfestem Matrixmaterial in der Kornfraktion < 5 mm aus mindestens einem Stoff der Gruppe MgO-Sinter, MgO-Spinell, MgO-Kauster.

5. Einsatz nach Anspruch 1 mit 1 bis 30 M.-% feuerfestem Matrixmaterial in der Korngröße < 10 µm aus mindestens einem Stoff der Gruppe MgO-Sinter, MgO-Kauster, MgO-Spinell.

6. Einsatz nach Anspruch 1 mit 1 bis 30 M.-% feuerfestem Matrixmaterial in der Kornfraktion < 5 µm aus mindestens einem Stoff der Gruppe MgO-Sinter, MgO-Kauster, MgO-Spinell.

7. Einsatz nach Anspruch 1 mit 3 bis 15 M.-% feuerfestem Matrixmaterial in der Kornfraktion < 10 µm aus mindestens einem Stoff der Gruppe MgO-Sinter, MgO-Kauster, MgO-Spinell.

8. Einsatz nach Anspruch 1 mit 3 bis 15 M.-% feuerfestem Matrixmaterial in der Kornfraktion < 5 µm aus mindestens einem Stoff der Gruppe MgO-Sinter, MgO-Kauster, MgO-Spinell.

9. Einsatz nach Anspruch 1 mit 2 bis 15 M.-% Zirkonmullit in der Kornfraktion 0,7 bis 3,2 mm.

10. Einsatz nach Anspruch 1 mit 2 bis 8 M.-% Zirkonmullit in der Kornfraktion 0,7 bis 3,2 mm.

11. Einsatz nach Anspruch 1 mit einem Gehalt zwischen 2 und 8 M.-% eines Bindeharzes, bezogen auf 100 M.-% der Werkstoffkomponenten gemäß Anspruch 1.

12. Einsatz nach Anspruch 11, bei dem das Bindeharz ein Phenolharz ist.

13. Einsatz nach Anspruch 1, bei dem das, die Oxidation des Kohlenstoffs hemmende Zusatzmittel metallisches Silicium ist.

14. Einsatz nach Anspruch 1 mit einem Außendurchmesser zwischen 80 und 300 mm und einem Innendurchmesser zwischen 20 und 150 mm.

15. Schieberplatte aus einem feuerfesten Matrixwerkstoff auf Basis Al₂O₃-C, in den mindestens ein ringförmiger Einsatz nach einem der Ansprüche 1 bis 14 integriert ist.

16. Schieberplatte nach Anspruch 15, bei der der ringförmige Einsatz eingemörtelt ist.

17. Schieberplatte nach Anspruch 15, bei der der ringförmige Einsatz durch gemeinsames Verpressen mit dem umgebenden feuerfesten Matrixwerkstoff verpreßt ist.

18. Schieberplatte nach Anspruch 15, mit einem Gehalt an Borcarbid.

19. Schieberplatte nach Anspruch 15, bei der der feuerfeste Werkstoff des ringförmigen Einsatzes einen gleichen oder größeren Wärmeausdehnungskoeffizienten als der den ringförmigen Einsatz umgebende feuerfeste Matrixwerkstoff aufweist.

20. Schieberplatte nach Anspruch 15 in Form einer Drehschieberplatte.

## Claims

1. Ring-shaped sliding plate insert based on MgO-C, comprising the following features:
- 75-90 M.-% refractory matrix material in a grain size < 7 mm, made of at least one material of the group: MgO-sinter, MgO-spinel, caustic magnesia,
- 2-1 M.-% zirconium mullite in a grain fraction 0,1-5 mm,
- 1-5 M.-% carbon
- 1-5 M.-% of an additive, inhibiting the oxidation of said carbon.

2. Insert according to claim 1 with 75-90 M.-% refractory matrix material in a grain size fraction < 5 mm of at least one material of the group: MgO-sinter, MgO-spinel, caustic magnesia.

3. Insert according to claim 1 with 75-85 M.-% refractory matrix material in a grain size fraction < 7 mm of at least one material of the group: MgO-sinter, MgO-spinel, caustic magnesia.

4. Insert according to claim 1 with 75-85 M.-% refractory matrix material in a grain size fraction < 5 mm of at least one material of the group: MgO-sinter, MgO-spinel, caustic magnesia.

5. Insert according to claim 1 with 1-30 M.-% refractory matrix material in a grain size < 10 µm of at least one material of the group: MgO-sinter, MgO-spinel, caustic magnesia.

6. Insert according to claim 1 with 1-30 M.-% refractory matrix material in a grain fraction < 5 µm of at least one material of the group: MgO-sinter, MgO-spinel, caustic magnesia.

7. Insert according to claim 1 with 3-15 M.-% refractory matrix material in a grain fraction < 10 µm of at least one material of the group: MgO-sinter, MgO-spinel, caustic magnesia.

8. Insert according to claim 1 with 3-15 M.-% refractory matrix material in a grain fraction < 5 mm of at least one material of the group: MgO-sinter, MgO-spinel, caustic magnesia.

9. Insert according to claim 1 with 2-15 M.-% zirconium mullite in a grain fraction 0,7 to 3,2 mm.

10. Insert according to claim 1 with 2-8 M.-% zirconium mullite in a grain fraction 0,7 to 3,2 mm.

11. Insert according to claim 1 with a content of between 2 and 8 M.-% of a binder resin, related to 100 M.-% of the material components according to claim 1.

12. Insert according to claim 11, wherein the binder resin is a phenolic resin.

13. Insert according to claim 1, wherein the additive, inhibiting oxidation of the carbon is metallic silicon.

14. Insert according to claim 1 with an outer diameter between 80 and 300 mm and an inner diameter between 20 and 150 mm.

15. Sliding plate made of a refractory matrix material on basis Al₂O₃₋C, in which at least one ring-shaped insert according to one of claims 1-14 is integrated.

16. Sliding plate according to claim 15, wherein the ring-shaped insert is mortared in.

17. Sliding plate according to claim 15, wherein the ring-shaped insert is pressed in by common pressing with the surrounding refractory matrix material.

18. Sliding plate according to claim 15, comprising boron carbide.

19. Sliding plate according to claim 15, in which the refractory material of the ring shaped insert has the same or a larger thermal expansion coefficient than that of the refractory matrix material surrounding the ring shaped insert.

20. Sliding plate according to claim 15, shaped as a rotary sliding plate.

## Revendications

1. Insert de tiroir plat de forme annulaire à base de MgO-C présentant les caractéristiques suivantes :
- 75 à 90 % de masse de matériau matriciel réfractaire dans la grosseur de grain < 7 mm à base d'au moins un produit du groupe Mgo-**fritté**, MgO-**spinelle**, MgO-**caustique**.
- 2 à 15 % de masse de mullite de zircon dans la fraction granulométrique 0,1 - 5 mm
- 1 à 5 % de masse de carbone
- 1 à 5 % de masse d'un additif inhibant l'oxydation du carbone.

2. Insert selon la revendication 1 comprenant 75 à 90 % de masse de matériau matriciel réfractaire dans la fraction granulométrique < 5 mm constitué d'au moins un produit du groupe MgO **fritté, Mg0 spinelle, Mg0 caustique.**

3. Insert selon la revendication 1 comprenant 75 à 85 % de masse de matériau matriciel réfractaire dans la fraction granulométrique < 7 mm constitué d'au moins un produit du groupe MgO **fritté, Mg0 spinelle, Mg0 caustique.**

4. Insert selon la revendication 1 comprenant 75 à 85 % de masse de matériau matriciel réfractaire dans la fraction granulométrique < 5 mm constitué d'au moins un produit du groupe MgO **fritté, Mg0 spinelle, Mg0 caustique**.

5. Insert selon la revendication 1 comprenant 1 à 30 % de masse de matériau matriciel réfractaire dans la grosseur de grain < 10 µm constitué d'au moins un produit du groupe MgO **fritté, Mg0 spinelle, Mg0 caustique.**

6. Insert selon la revendication 1 avec 1 à 30 % de masse de matériau matriciel réfractaire dans la fraction granulométrique < 5 µm constitué d'au moins un produit du groupe MgO **fritté, Mg0 spinelle, Mg0 caustique.**

7. Insert selon la revendication 1 comprenant 3 à 15 % de masse de matériau matriciel réfractaire dans la fraction granulométrique < 10 µm constitué d'au moins un produit du groupe MgO **fritté, Mg0 spinelle, Mg0 caustique.**

8. Insert selon la revendication 1 comprenant 3 à 15 % de masse de matériau matriciel réfractaire dans la fraction granulométrique < 5 µm constitué d'au moins un produit du groupe MgO **fritté, Mg0 spinelle, Mg0 caustique.**

9. Insert selon la revendication 1 comprenant 2 à 15 % de masse de mullite de zircon dans la fraction granulométrique de 0,7 à 3,2 mm.

10. Insert selon la revendication 1 comprenant 2 à 8 % de masse de mullite de zircon dans la fraction granulométrique de 0,7 à 3,2 mm.

11. Insert selon la revendication 1 avec une teneur comprise entre 2 et 8 % de masse d'une résine de liaison, rapportée à 100 % de masse des composants de matériau selon la revendication 1.

12. Insert selon la revendication 11, dans lequel la résine de liaison est une résine phénolique.

13. Insert selon la revendication 1, dans lequel l'additif inhibant l'oxydation du carbone est un silicium métallique.

14. Insert selon la revendication 1 présentant un diamètre extérieur compris entre 80 et 300 mm et un diamètre intérieur compris entre 20 et 150 mm.

15. Tiroir plat constitué d'un matériau matriciel réfractaire à base de Al₂O₃-C, sur lequel est intégré au moins un insert de forme annulaire selon l'une quelconque des revendications 1 à 14.

16. Tiroir plat selon la revendication 15, dans lequel l'insert de forme annulaire est fixé par mortier.

17. Tiroir plat selon la revendication 15, sur lequel l'insert de forme annulaire est comprimé par une compression commune avec le matériau matriciel réfractaire environnant.

18. Tiroir plat selon la revendication 15, comprenant une teneur de carbure de bore.

19. Tiroir plat selon la revendication 15, sur lequel le matériau réfractaire de l'insert de forme annulaire présente un coefficient de dilatation thermique identique ou plus grand que le matériau matriciel réfractaire entourant l'insert de forme annulaire.

20. Tiroir plat selon la revendication 15 sous la forme d'un tiroir plat rotatif.
